# EUROPEAN PATENT SPECIFICATION

(11) **EP 4 008 628 B1**
(45) Date of publication and mention of the grant of the patent: **08.02.2023**
(21) Application number: 20400022.8
(22) Date of filing: 02.12.2020
(51) Int. Cl.: B64C 27/26, B64C 39/06

(54) **A COMPOUND HELICOPTER WITH BRACED WINGS IN JOINED-WING CONFIGURATION**
KOMBINATIONSFLUGSCHRAUBER MIT VERSTREBTEN FLÜGELN IN KONFIGURATION MIT VERBUNDENEN FLÜGELN
GIRODYNE À AILES CONTREVENTÉES ET EN CONFIGURATION À AILES JOINTES

(43) Date of publication of application: 08.06.2022
(73) Proprietor: AIRBUS HELICOPTERS DEUTSCHLAND GmbH, 86609 Donauwörth (DE); AIRBUS HELICOPTERS, 13725 Marignane Cedex (FR)
(72) Inventor: FINK, Axel, 86609 Donauwörth (DE); PARDOUX, Pierre, 13290 Aix les Milles (FR)
(74) Representative: GPI Brevets

(56) References cited:
- EP-A1- 2 690 011
- EP-A1- 3 141 478
- US-A- 2 665 859
- US-A1- 2015 284 076
- US-B2- 9 315 263

## Description

The present invention relates to a compound helicopter with a wheel-type landing gear.

Compound helicopters are in addition to so-called convertiplanes basically the most relevant concepts aiming to overcome horizontal flight deficiencies of conventional helicopters, i. e. helicopters with a main rotor and an auxiliary tail rotor that is adapted to counter torque, by introducing attributes of fixed wing aircrafts to such conventional helicopters. Accordingly, a given compound helicopter can be designed for lift compounding, thrust compounding or a combination of both, all of which basically aim to off-load a respective main rotor from its simultaneous lifting and propulsive duties to allow for higher forward speeds of the given compound helicopter.

More specifically, lift compounding implies adding wings to a conventional helicopter, hence enabling increase of an underlying load factor of the helicopter and reaching of a higher maneuverability. This enables provision of a compound helicopter with improved efficiency at moderately high speed, but at the expense of reduced efficiencies at lower forward speeds and in hover.

Thrust compounding, in turn, implies adding essentially horizontally oriented auxiliary propulsion units to a conventional helicopter. This has been typically accomplished by means of a single propeller or a pair of propellers being driven by drive shafts powered by main turboshaft engines of a respective helicopter. The use of a pair of propulsion units has the advantage of providing a compound helicopter with improved anti-torque capabilities without the need of an additional tail rotor, hence relativizing the inherent system complexity of a thrust compound configuration.

A more extended configuration of a compound helicopter includes both the addition of wings and propulsion units. In this case, lift during cruise is simultaneously provided by a given main rotor and the wings. Higher forward speed is provided by horizontally oriented auxiliary propulsion units of the compound helicopter. The compound helicopter, thus, overcomes underlying rotor lift limits by means of the wings and underlying rotor thrust limits by means of the propulsion units. As a result, a higher load factor is obtained along with potential for higher speed. In particular, use of a pair of thrust propulsion units - opposed and both offset relative to each other and to a longitudinal axis of the compound helicopter - enables for a simultaneous torque correction.

Illustrative compound helicopters with two wing-mounted propellers are described in the documents EP 2 105 378 A1, EP 2 146 896 A1, EP 2 574 546 A1, EP 2 690 010 A1, US 2,653,778 A, US 2,940,693 A, US 3,698,666 A, US 9,315,263 B2, and WO 2008/142257 A1. In all of these documents, an underlying configuration of the respective compound helicopters is based on a monoplane wing structure with a single main wing plane.

Deviating therefrom are compound helicopters with braced wing configurations, i. e. with braced wings in box-wing or joined-wing configuration. Generally, such box-wing or joined-wing configurations are provided in the form of a bi-plane wing structure with two main wing planes. In the box-wing configuration respective braced wings comprise upper and lower wings which are joined together to form a loop-shaped closed wing without defining conventional wing tips, while in the joined-wing configuration the respective upper and lower wings are respectively joined to each other at associated wing tips.

Illustrative compound helicopters with two wing-mounted propellers and braced wings in joined-wing configuration are described in the documents EP 2 690 011 A1 and EP 3 141 478 A1. These illustrative compound helicopters are described in more detail hereinafter.

The document EP 2 690 011 A1 describes a compound helicopter having braced wings in joined-wing configuration, wherein a lower wing and an upper wing are provided on each side of the compound helicopter. Both wings are essentially straight and interconnected to each other at a wing interconnection region, and a pusher propeller is installed in the wing interconnection region behind associated trailing edges of both wings.

The document EP 3 141 478 A1 describes another compound helicopter having braced wings in joined-wing configuration. The compound helicopter has a fuselage and at least one main rotor that is at least adapted for generating lift in operation. The fuselage comprises a lower side and an upper side that is opposed to the lower side. The at least one main rotor is arranged at the upper side. At least one propeller is provided that is at least adapted for generating forward thrust in operation, the at least one propeller being mounted to a fixed wing arrangement that is laterally attached to the fuselage. The fixed wing arrangement comprises at least one braced wing with an upper wing that is connected via an upper wing root joint area to the upper side of the fuselage and at least one lower wing with an inboard section that is connected via a lower wing root joint area to the lower side of the fuselage. The upper and lower wings are at least interconnected at an associated wing interconnection region.

In the above-described illustrative compound helicopters with two wing-mounted propellers and braced wings in joined-wing configurations, the propellers are arranged on the braced wings at the respective wing interconnection regions. A respective lateral allocation of the propellers is mainly dependent on a required hover and speed performance of a given compound helicopter, while size and shape of the braced wings are influenced by a respectively required position of the propellers. This respectively required position of the propellers in turn is mainly driven by a required ground clearance of the propellers and, more particularly, of the propeller blades, with respect to ground within specified roll attitudes at landing, and is limited in upward direction by a required upward clearance to respective main rotor blades. However, a respectively available ground clearance is besides others impacted by an underlying design of an associated landing gear of a given compound helicopter.

The document EP 3 141 478 A1 describes a compound helicopter with a wheel-type main landing gear that is mounted to the inboard section of the lower wing of the compound helicopter and at least partially retractable into the inboard section, and a wheel-type nose landing gear that is arranged at a nose section of the fuselage. The wheel-type main landing gear and the wheel-type nose landing gear form a so-called tricycle wheel-type landing gear.

A tricycle wheel-type landing gear is generally designed such that the compound helicopter, or likewise any conventional helicopter with such a tricycle wheel-type landing gear, stands on ground on three separate landing gear parts which are respectively arranged in a nose landing gear and/or a main or tail landing gear arrangement. More specifically, in a first possible configuration the nose landing gear arrangement features a single inner landing gear on the nose fuselage section while the main or tail landing gear arrangement features two outer landing gears which are aligned on a transversal helicopter line on a rear fuselage section. In a second possible configuration the main or tail landing gear arrangement features a single inner landing gear on the rear fuselage section, while the nose landing gear arrangement features two outer landing gears which are aligned on a transversal helicopter line on the nose fuselage section. However, the inherent advantage of the first configuration compared to the second configuration in terms of directional stability during take-off, touchdown and landing, which is beneficially used on airplanes, does not apply for helicopters due to their vertical take-off and landing operation. As a result, contrary to airplanes, both configurations are widely used for helicopters.

In general, in the tricycle wheel-type landing gear length and position of respective landing gear components are mainly a function of a required stroke with respect to energy absorption during landing, as well as of a required track with respect to helicopter ground stability, both of which impact the available ground clearance for a winged compound helicopter with lateral propellers. Therefore, a large required ground clearance may impose for the respective landing gear components large main leg lengths and large tracks, which is even more aggravated for slim fuselages especially designed for large high-speed efficiencies.

Considering now that landing gears represent roughly up to 6% of an overall empty weight of a helicopter in general, independent of whether the helicopter is a conventional helicopter or a compound helicopter, it appears imperative to reduce an underlying landing gear weight by means of reducing its size and by simplifying its integration into the helicopter as much as possible. This is, obviously, even more decisive when targeting for high speed performances. As in a given helicopter and, more particularly, in a given compound helicopter, the landing gear, propellers, braced wings, fuselage and main rotor(s) interact with each other within an underlying overall architectural arrangement, an elaborated mutual balance aiming an overall optimum performance is required.

In summary, a very important aspect impacting a respective overall architectural arrangement of a compound helicopter resides in a required ground clearance between its propellers, i. e. propeller blades, and ground. This ground clearance is strongly related to a respective clearance of the propellers to a given main rotor and respective landing gear characteristics and arrangement. Using a conventional tricycle wheel-type landing gear, there is a certain minimally required ground clearance which is defined by the relative position of a wheel of a respective outer landing gear and the propeller on the same side of the compound helicopter. Going below that minimally required ground clearance may translate to an unacceptable risk of contact of the propeller to the ground, e. g. during landing.

It should be noted that the same restrictions and difficulties also apply to alternative landing gear types other than the tricycle wheel-type landing gear, such as e. g. the so-called quadricycle wheel-type landing gear. Furthermore, the same and even other restrictions also apply to still other alternatives, such as e. g. the so-called bicycle or tandem wheel-type landing gear which is generally known from aircraft designs and which uses two main landing gears arranged along a centerline of a given aircraft, one forward and one aft of the center of gravity of the aircraft. However, when using a bicycle or tandem wheel-type landing gear e. g. in an airplane design, two additional small outrigger wheels mounted along the airplane's wing are required to prevent the airplane from rolling over and consequently its wing tips from contacting ground. Thus, despite of their achievable lower total weight, bicycle or tandem wheel-type landing gears are relatively uncommon for airplanes since they are very demanding during take-off and landing, which requires a very precise level attitude, and hence large runways. Furthermore, a compensation for any rolling motion that could cause the airplane to land unevenly on one of the small outrigger wheels, especially under the effect of crosswinds, is required.

It is, therefore, an object of the present invention to provide a new compound helicopter that overcomes the above described drawbacks. More specifically, it is the object of the present invention to provide a new compound helicopter with lateral propellers that enables a reduction of the risk of ground contact of the lateral propellers, hence improving underlying landing safety characteristics of the compound helicopter and increasing the perceived safety during landing whilst reducing the overall weight contribution of an associated main landing gear.

This object is solved by a compound helicopter comprising the features of claim 1. More specifically, according to the present invention a compound helicopter with a fuselage that extends along a longitudinal axis from a front fuselage section to a rear fuselage section comprises a wheel-type main landing gear in tandem configuration, a wheel-type lateral landing gear, and at least a first braced wing in joined-wing configuration and a second braced wing in joined-wing configuration. The first braced wing comprises a first upper wing and a first lower wing which are interconnected in a first interconnection region, and the second braced wing comprises a second upper wing and a second lower wing which are interconnected in a second interconnection region. The wheel-type main landing gear comprises a first main landing gear and a second main landing gear which are pivotally mounted in a lower fuselage section of the fuselage and aligned on the longitudinal axis. The first main landing gear is arranged in the front fuselage section, and the second main landing gear is arranged in the rear fuselage section. The wheel-type lateral landing gear comprises a first lateral landing gear and a second lateral landing gear. The first lateral landing gear is pivotally mounted in the first interconnection region, and the second lateral landing gear is pivotally mounted in the second interconnection region.

Advantageously, in contrast to mono-wing layouts the joined-wing configuration of the first and second braced wings is particularly beneficial for the use of lateral support wheels, i. e. the first and second lateral landing gears, since a given landing shock introduced during a sloped landing by the lateral landing gears is efficiently reacted by the triangular truss characteristic of the braced wings in joined-wing configuration. Furthermore, the use of a tandem layout for the wheel-type main landing gear with only two compact first and second main landing gears, as well as in addition two secondary tip landing gears for realizing the first and second lateral landing gears is deemed in overall terms lighter in comparison to a conventional tricycle landing gear with two main landing gears and one nose landing gear, the main landing gears having a large length to ensure sufficient track for ground stability.

More specifically, the compound helicopter preferably comprises a braced wing in joined-wing configuration on each side of the compound helicopter, with a pair of propulsion devices, i. e. lateral propellers, providing thrust, and at least one main rotor providing lift and thrust. The braced wing on each side of the compound helicopter provides additional lift during horizontal cruise flight. The lateral propellers are preferably arranged on the braced wings at the interconnection regions of respective wings, preferentially one at each side of the compound helicopter.

The lateral propellers may be driven by associated lateral gears. The associated lateral gears are preferably housed within lateral nacelles which may be arranged at outermost tips of the braced wings.

Each braced wing may be composed of an upper wing that is connected to an upper fuselage section, and a lower wing that is connected to a lower fuselage section. Respective wing tips of upper and lower wings of each braced wing are preferably interconnected to each other at associated wing interconnection regions.

The wheel-type main landing gear is preferably arranged within the fuselage and aligned along a respective centreline of the compound helicopter. The first main landing gear of the wheel-type main landing gear may be arranged within a front portion of the compound helicopter's fuselage ahead of a rotor axis of the at least one main rotor, and the second main landing gear of the wheel-type main landing gear may be arranged within a rear portion of the fuselage behind the rotor axis. The rotor axis in turn is preferentially essentially aligned at an overall center of gravity of the compound helicopter.

The first and second main landing gears may be designed with similar retraction/deployment kinematics. This simplifies landing gear development and maintenance beneficially.

The first main landing gear may be arranged closer to the rotor axis than the second main landing gear. Furthermore, the first and second main landing gears may be retractable and storable within internal storage compartments provided on, respectively within, the fuselage. Preferably, the internal storage compartments are closable by means of trap doors.

Advantageously, the second main landing gear is housed within a central rear region of the fuselage, hence, introducing all landing loads directly to strong structural center members of the fuselage. Furthermore, the impact of the second main landing gear on the size of the internal storage compartments within the fuselage can be minimized, as a result of achievable smaller sizes and simpler kinematics of the first main landing gear, thus, having less loss of fuel volume storage capacity in comparison to a conventional tricycle wheel-type layout.

Preferably, the wheel-type lateral landing gear comprises comparatively small lateral landing gears which implement the first and second lateral landing gears and which are arranged close to the lateral nacelles. More especially, the first and second lateral landing gears are preferably arranged close to the respective wing interconnection regions of the first and second braced wings.

Advantageously, the first and second lateral landing gears ensure a required ground clearance of the propellers with respect to ground such that an accidental contact of respective propeller blades to ground during normal landing may be eliminated. Thus, an underlying size of the wheel-type main landing gear can be designed independently from a propeller-to-ground contact requirement, i. e. a respective ground clearance of the propellers, on the one hand, and a ground stability requirement on the other, hence allowing for a weight efficient main landing gear design and further optimizing the overall performance of the compound helicopter.

The first and/or second lateral landing gears may be retractable along an axis that is at least essentially oriented perpendicular to an extensional axis in length direction of the braced wing on which the first and/or second lateral landing gear is arranged. It may be housed within a lateral landing gear compartment provided within the center box of the braced wing and, more especially, of the lower wing of the braced wing. The lateral landing gear compartment is preferably closable by means of associated trap doors.

Advantageously, the interruption of the center box of the lower wing for provision of the lateral landing gear compartment does not represent a structural penalty as the braced wings in joined-wing configuration as such are inherently structurally hyperstatic, in contrast to wings in mono-wing layout. Consequently, provision of the lateral landing gear compartment in the wing is particularly beneficial for joined-wing compound helicopters. In addition, a respective retraction traveling distance of the lateral landing gear into the lower wing of the braced wing in joined-wing configuration is reduced in comparison to a mono-wing layout when retracting the lateral landing gear into a dihedral lower wing, than into a single anhedral wing in a mono-wing layout, hence, leading to simpler and lighter kinematics of the lateral landing gear for the braced wing in joined-wing configuration.

Furthermore, the aerodynamic performance within a wing portion of the lower wing that is located close to the fuselage is decisive for the aerodynamic efficiency of a braced wing in joined-wing configuration. Consequently, the wheel-type main landing gear in tandem configuration, which is arranged within the center plane of the compound helicopter, avoids any distortion of that wing portion excited by the trap doors of the main landing gear and, hence, allows for a clean and improved aerodynamic flow in that area. In contrast, the wheel-type lateral landing gear is arranged within the interconnection regions of the upper and lower wings, which naturally represent an aerodynamically less efficient area due to the interference drag excited by pronounced interaction of the upper and lower wings in that area. As a result, the trap doors of the lateral landing gear in that area are expected to provide for a less negative impact on the overall aerodynamic wing performance.

In an alternative realization, the first and/or second lateral landing gear may be retractable along an axis that is at least essentially oriented perpendicular to the longitudinal axis of the fuselage and housed within a lateral landing gear compartment provided within, or close to, an associated one of the lateral nacelles. The direction of retraction into the lateral landing gear compartment may be opposed to the positioning of the propeller with respect to the retraction axis, i. e. in a direction pointing away from the propeller.

Still alternatively, the first and/or second lateral landing gear may be retractable along an axis that is at least essentially oriented perpendicular to the longitudinal axis of the fuselage and housed within a lateral landing gear compartment within, or close to, an associated one of the lateral nacelles. The direction of retraction into the lateral landing gear compartment may be in direction of the positioning of the propeller with respect to the retraction axis, i. e. in a direction pointing towards the propeller.

Advantageously, the retraction of the first and/or second lateral landing gear into an at least essentially longitudinally oriented position, aligned with the lateral nacelles, allows for an additional protection of the first and/or second lateral landing gears against bird impact and avoids the above-described interruption of the center box of the lower wing.

Still alternatively, the first and/or second lateral landing gear may be housed within a stub wing and retracted in outboard direction of a respective braced wing to which the first and/or second lateral landing gear is mounted. The stub wing may at least essentially be arranged horizontally in a retracted position.

The use of a lateral landing gear being housed within a stub wing avoids beneficially any impact on the wing structure of the compound helicopter and provides for an additional lifting surface. During hover and landing of the compound helicopter, the stub wing may be adjusted for deployment of the lateral landing gear and does, in this case, not impact negatively on the downwash performance of the compound helicopter.

Advantageously, the landing gear layout as a whole ensures a large track and, hence, a large helicopter stability of the compound helicopter.

According to one aspect, the first main landing gear is retractable into a first main landing gear compartment, and the second main landing gear is retractable into a second main landing gear compartment. The first main landing gear compartment and the second main landing gear compartment are arranged in the lower fuselage section and closable by associated trap doors.

According to one aspect, the first main landing gear comprises a first main leg and a first actuator, and the second main landing gear comprises a second main leg and a second actuator. The first actuator and the second actuator are arranged in a plane that is spanned by the longitudinal axis and a vertical axis of the fuselage. The first actuator and the second actuator are provided to move the first main leg and the second main leg in the plane that is spanned by the longitudinal axis and the vertical axis between a retracted position and a deployed position of the first main landing gear and the second main landing gear.

According to one aspect, a first lateral nacelle is mounted to the first interconnection region, and a second lateral nacelle is mounted to the second interconnection region. A first propeller is mounted to the first lateral nacelle, and a second propeller is mounted to the second lateral nacelle.

According to one aspect, the first lateral landing gear is pivotally mounted to the first lateral nacelle, and the second lateral landing gear is pivotally mounted to the second lateral nacelle.

According to one aspect, the first lateral nacelle comprises a first lateral landing gear compartment for accommodating the first lateral landing gear in retracted position, and the second lateral nacelle comprises a second lateral landing gear compartment for accommodating the second lateral landing gear in retracted position.

According to one aspect, the first lateral landing gear compartment and the second lateral landing gear compartment are closable by associated trap doors.

According to one aspect, the first lateral landing gear is pushed in a direction pointing away from the first propeller for pivoting around a first rotation axis from a retracted position into a deployed position, and the second lateral landing gear is pushed in a direction pointing away from the second propeller for pivoting around a second rotation axis from a retracted position into a deployed position.

According to one aspect, the first lateral landing gear is pushed in a direction pointing toward the first propeller for pivoting around a first rotation axis from a retracted position into a deployed position, and the second lateral landing gear is pushed in a direction pointing toward the second propeller for pivoting around a second rotation axis from a retracted position into a deployed position.

According to one aspect, the first and second rotation axes are at least essentially perpendicular to the longitudinal axis.

According to one aspect, the compound helicopter further comprises a first stub wing that is mounted to the first interconnection region and that extends at least essentially in parallel to a transversal axis of the fuselage, and a second stub wing that is mounted to the second interconnection region and that extends at least essentially in parallel to the transversal axis of the fuselage.

According to one aspect, the first stub wing is mounted to the first lateral nacelle, and the second stub wing is mounted to the second lateral nacelle.

According to one aspect, the first lateral landing gear is accommodated in the first stub wing in retracted position, and the second lateral landing gear is accommodated in the second stub wing in retracted position.

According to one aspect, the first lateral landing gear is pivotable from a retracted position into a deployed position together with the first stub wing around a first rotation axis that is at least essentially oriented in parallel to the longitudinal axis of the fuselage, and the second lateral landing gear is pivotable from a retracted position into a deployed position together with the second stub wing around a second rotation axis that is at least essentially oriented in parallel to the longitudinal axis of the fuselage.

According to one aspect, the first lower wing comprises a first lateral landing gear compartment for accommodating the first lateral landing gear in retracted position, and the second lower wing comprises a second lateral landing gear compartment for accommodating the second lateral landing gear in retracted position.

Preferred embodiments are outlined by way of example in the following description with reference to the attached drawings. In these attached drawings, identical or identically functioning components and elements are labeled with identical reference numbers and characters and are, consequently, only described once in the following description.
- Figure 1 is a front view of an illustrative compound helicopter with braced wings in joined-wing configuration,
- Figure 2 is a bottom view of the compound helicopter of Figure 1 with two illustrative examples of lateral landing gears,
- Figure 3 is a bottom view of the compound helicopter of Figure 1 with two other illustrative examples of lateral landing gears, and
- Figure 4 is a front view of the compound helicopter of Figure 1 with two illustrative rotatable stub wings.

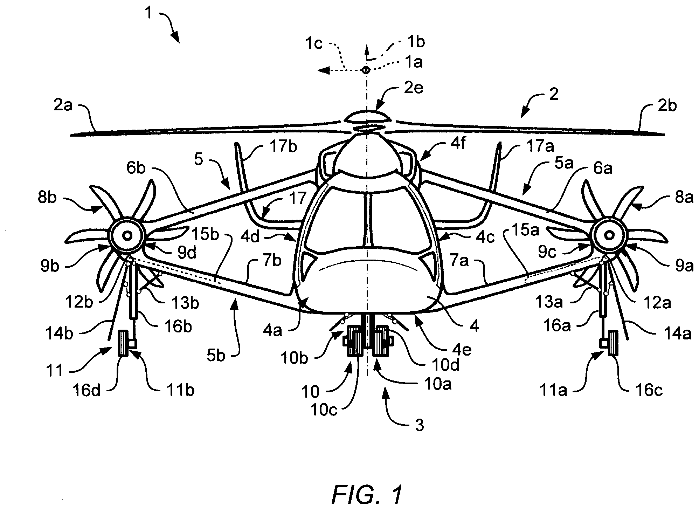

Figure 1 shows an illustrative compound helicopter 1. The compound helicopter 1 is shown with three mutually orthogonal directions 1a, 1b and 1c. The direction 1a represents a longitudinal axis that corresponds to the roll axis inherent to the compound helicopter 1, the direction 1b represents a vertical axis that corresponds to the yaw axis inherent to the compound helicopter 1, and the direction 1c represents a transversal axis that corresponds to the pitch axis inherent to the compound helicopter 1.

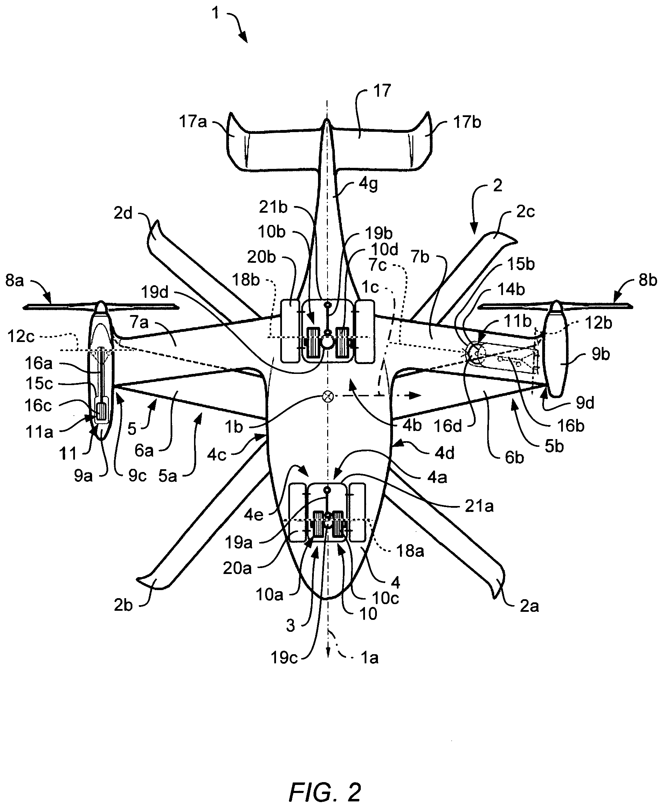

By way of example, the compound helicopter 1 comprises at least one main rotor 2 and a landing gear arrangement 3, both of which are illustratively mounted to a fuselage 4 that extends along the longitudinal axis 1a from a front fuselage section 4a to a rear fuselage section (4b in Figure 2), along the vertical axis 1b from a lower fuselage section 4e to an upper fuselage section 4f, and along the transversal axis 1c from a port side 4c of the compound helicopter 1 to a starboard side 4d of the compound helicopter 1. The at least one main rotor 2 is at least adapted for generating lift in flight operation of the compound helicopter 1. By way of example, the at least one main rotor 2 comprises at least two rotor blades 2a, 2b, which are illustratively mounted to a rotor head 2e that is arranged above the upper fuselage section 4f of the fuselage 4. Illustratively, the compound helicopter 1 also comprises a rear empennage 17 with vertical fins 17a, 17b.

Preferably, the compound helicopter 1 further comprises a fixed wing arrangement 5 that is laterally attached to the fuselage 2 and illustratively includes at least a first braced wing 5a in joined-wing configuration and a second braced wing 5b in joined-wing configuration. By way of example, the braced wing 5a comprises an upper wing 6a and a lower wing 7a, and the braced wing 5b comprises an upper wing 6b and a lower wing 7b. Each one of the upper wings 6a, 6b preferably exhibits an anhedral angle relative to the transversal axis 1c of the compound helicopter 1. Each one of the lower wings 7a, 7b preferably exhibits a positive dihedral angle relative to the transversal axis 1c of the compound helicopter 1, i. e. a pronounced upward angle from the transversal axis 1c.

The compound helicopter 1 preferably further comprises at least one propeller that is at least adapted for generating forward thrust in operation. The at least one propeller is preferentially mounted to the fixed wing arrangement 5. By way of example, the compound helicopter 1 comprises two propellers 8a, 8b, one on each side of the fuselage 2. More specifically, a first propeller 8a is illustratively mounted to the braced wing 5a and a second propeller 8b is illustratively mounted to the braced wing 5b. Preferably, the propellers 8a, 8b are pusher propellers. However, the propellers 8a, 8b may alternatively also be puller propellers.

Illustratively, the braced wing 5a with the upper wing 6a and the lower wing 7a is arranged on the port side 4c of the compound helicopter 1 and the braced wing 5b with the upper wing 6b and the lower wing 7b is arranged on the starboard side 4d of the compound helicopter 1. The upper wings 6a, 6b may be mounted to the upper fuselage section 4f of the fuselage 4 at an upper wing root joint area provided in the upper fuselage section 4f, and the lower wings 7a, 7b may be mounted to the lower fuselage section 4e of the fuselage 4 at a lower wing root joint area provided in the lower fuselage section 4e. Preferably, the upper wing 6a and the lower wing 7a of the braced wing 5a are interconnected in an interconnection region 9c, and the upper wing 6b and the lower wing 7b of the braced wing 5b are interconnected in an interconnection region 9d.

Illustratively, the pusher propellers 8a, 8b are mounted to the interconnection regions 9c, 9d. Preferably, a first lateral nacelle 9a is mounted to the interconnection region 9c and a second lateral nacelle 9b is mounted to the interconnection region 9d. The pusher propeller 8a may, thus, be mounted to the lateral nacelle 9a, and the pusher propeller 8b may be mounted to the lateral nacelle 9b, as illustrated. By way of example, the lateral nacelles 9a, 9b may be adapted to accommodate lateral gears which are driven via a main gear box of the compound helicopter 1 for driving the pusher propellers 8a, 8b. Furthermore, the lateral nacelles 9a, 9b or, more generally, the interconnection regions 9c, 9d may be used for the installation of components of the landing gear arrangement 3 of the compound helicopter 1, as described in more detail below.

According to one aspect, the landing gear arrangement 3 comprises a wheel-type main landing gear 10 and a wheel-type lateral landing gear 11. The wheel-type main landing gear 10 is preferably provided in tandem configuration with a front main landing gear 10a arranged in the front fuselage section 4a of the fuselage 4, and a rear main landing gear 10b arranged in a rear fuselage section (4b in Figure 2). The front main landing gear 10a and the rear main landing gear 10b may be pivotally mounted in the lower fuselage section 4e of the fuselage 4 and aligned on the longitudinal axis 1a. The front main landing gear 10a and the rear main landing gear 10b are illustratively provided with wheels 10c, 10d and described in more detail at Figure 2. The wheels 10c of the front main landing gear 10a may be steerable.

The wheel-type lateral landing gear 11 illustratively comprises a port side lateral landing gear 11a and a starboard side lateral landing gear 11b. Preferably, the port side lateral landing gear 11a is pivotally mounted in the interconnection region 9c, and the starboard side lateral landing gear 11b is pivotally mounted in the interconnection region 9d. According to one aspect, the port side lateral landing gear 11a and the starboard side lateral landing gear 11b are realized with similar kinematics.

By way of example, the port side lateral landing gear 11a and the starboard side lateral landing gear 11b are shown in deployed position in Figure 1, which is e. g. required for take-off or landing of the compound helicopter 1. During flight operation of the compound helicopter 1, the port side lateral landing gear 11a and the starboard side lateral landing gear 11b are preferably retracted into a retracted position. Retraction of the port side lateral landing gear 11a and the starboard side lateral landing gear 11b may be performed by rotating the port side lateral landing gear 11a and the starboard side lateral landing gear 11b respectively around an associated rotation axis 12a, 12b in response to activation of associated actuators 13a, 13b. In the illustrated example, the port side lateral landing gear 11a is rotated in response to activation of the actuator 13a towards the lower wing 7a of the braced wing 5a, and the starboard side lateral landing gear 11b is rotated in response to activation of the actuator 13b towards the lower wing 7b of the braced wing 5b.

Preferably, the port side lateral landing gear 11a is coupled to an associated trap door 14a such that the trap door 14a is rotated together with the port side lateral landing gear 11a towards the retracted position. Similarly, the starboard side lateral landing gear 11b is coupled to an associated trap door 14b such that the trap door 14b is rotated together with the starboard side lateral landing gear 11b towards the retracted position.

In the retracted position, the port side lateral landing gear 11a is preferably accommodated in an associated lateral landing gear compartment 15a that is illustratively provided in the lower wing 7a of the braced wing 5a. Similarly, the starboard side lateral landing gear 11b is preferably accommodated in the retracted position in an associated lateral landing gear compartment 15b that is illustratively provided in the lower wing 7b of the braced wing 5b. The lateral landing gear compartments 15a, 15b are, in the retracted position of the port side lateral landing gear 11a and the starboard side lateral landing gear 11b, preferably closed by the trap doors, 14a, 14b, respectively.

By way of example, the port side lateral landing gear 11a comprises a leg 16a and a wheel 16c, and the starboard side lateral landing gear 11b comprises a leg 16b and a wheel 16d. However, it should be noted that suitable configurations and components, such as legs, wheels, actuators, trap doors and so on, which may be used for implementation of the port side lateral landing gear 11a and the starboard side lateral landing gear 11b of the compound helicopter 1, are well-known to the person skilled in the art and not part of the present invention as such. Therefore, a detailed description of these configurations and components is omitted, for brevity and conciseness.

Figure 2 shows the compound helicopter 1 of Figure 1 from below with the main rotor 2, the landing gear arrangement 3, the fuselage 4, the fixed wing arrangement 5, the pusher propellers 8a, 8b, and the rear empennage 17. The main rotor 2 has the rotor blades 2a, 2b and, by way of example, two further rotor blades 2c, 2d. The landing gear arrangement 3 has the wheel-type main landing gear 10 and the wheel-type lateral landing gear 11. The fixed-wing arrangement 5 has the braced wings 5a, 5b. The rear empennage 17 has the vertical fins 17a, 17b and is illustratively mounted to a tail boom 4g that is connected to the fuselage 4.

As described at Figure 1, the wheel-type main landing gear 10 comprises the front main landing gear 10a with the wheels 10c, which is arranged in the front fuselage section 4a of the fuselage 4, as well as the rear main landing gear 10b with the wheels 10d, which is arranged in a rear fuselage section 4b. The front main landing gear 10a is preferably retractable into a front main landing gear compartment 21a that is located in the front fuselage section 4a and that may be closable by means of an associated trap door 20a. Similarly, the rear main landing gear 10b is preferably retractable into a rear main landing gear compartment 21b that is located in the rear fuselage section 4b and that may be closable by means of an associated trap door 20b. The front main landing gear compartment 21a and the rear main landing gear compartment 21b are illustratively arranged in, and preferably integrated into the lower fuselage section 4e of the fuselage 4.

According to one aspect, the front main landing gear 10a and the rear main landing gear 10b are realized with similar kinematics. More specifically, the front main landing gear 10a preferably comprises a main leg 19c and an actuator 19a, and the rear main landing gear 10b preferably comprises a main leg 19d and an actuator 19b. Illustratively, the actuators 19a, 19b are arranged in a plane that is spanned by the longitudinal axis 1a and the vertical axis 1b of the fuselage 4. Preferably, the actuators 19a, 19b are provided to move the main legs 19c, 19d in the plane that is spanned by the longitudinal axis 1a and the vertical axis 1b between a deployed position of the front main landing gear 10a and the rear main landing gear 10b, as illustrated, and a retracted position. This movement consists preferably in a rotation of the main legs 19c, 19d around associated rotation axes 18a, 18b in response to activation of the actuators 19a, 19b. This rotation is performed around associated rotation axes 18a, 18b such that the wheels 10c, 10d are preferably moved in a direction pointing towards the tail boom 4g.

However, it should be noted that suitable configurations and components, such as legs, wheels, actuators, trap doors and so on, which may be used for implementation of the front main landing gear 10a and the rear main landing gear 10b of the compound helicopter 1, are well-known to the person skilled in the art and not part of the present invention as such. Therefore, a detailed description of these configurations and components is omitted, for brevity and conciseness.

Furthermore, as also described above at Figure 1, the wheel-type lateral landing gear 11 comprises the port side lateral landing gear 11a and the starboard side lateral landing gear 11b. The starboard side lateral landing gear 11b is illustratively configured as described above at Figure 1 with the leg 16b and the wheel 16d, and is rotatable around the rotation axis 12b from the deployed position of Figure 1 into the retracted position according to Figure 2, in which the starboard side lateral landing gear 11b is accommodated in the lateral landing gear compartment 15b. As described above, the latter is then preferably closed by means of the trap door 14b of Figure 1.

Preferably, the rotation axis 12b is at least approximately perpendicular to an extensional axis 7c of the lower wing 7b of the braced wing 5b. Thus, the lateral landing gear compartment 15b may be arranged centrally in the lower wing 7b.

However, in contrast to Figure 1 the port side lateral landing gear 11a is now illustrated according to a first alternative realization. In this first alternative realization, the port side lateral landing gear 11a is pivotally mounted to the lateral nacelle 9a. The lateral nacelle 9a preferably comprises an associated lateral landing gear compartment 15c for accommodating the port side lateral landing gear 11a in retracted position. The lateral landing gear compartment 15c is then preferably closed by means of a trap door, which is, nevertheless, not illustrated in Figure 2 for clarity and simplicity of the drawing.

For pivoting the port side lateral landing gear 11a from the illustrated retracted position into the deployed position, the port side lateral landing gear 11a is preferably pushed in a direction pointing toward the pusher propeller 8a for pivoting around a rotation axis 12c. The rotation axis 12c is, by way of example, at least essentially perpendicular to the longitudinal axis 1a of the fuselage 4.

It should be noted that the compound helicopter 1 is shown in Figure 2 with two different realizations that distinguish the port side lateral landing gear 11a from the starboard side lateral landing gear 11b. However, this is merely intended for purposes of illustration and in order to permit to compare these realizations. In fact, in a real-life implementation either one of the two different realizations would be selected for the port side lateral landing gear 11a and the starboard side lateral landing gear 11b. Thus, either both the port side lateral landing gear 11a and the starboard side lateral landing gear 11b would be implemented as described above at Figure 1 and shown in Figure 2 with respect to the starboard side lateral landing gear 11b, or both the port side lateral landing gear 11a and the starboard side lateral landing gear 11b would be implemented as shown in Figure 2 with respect to the port side lateral landing gear 11a.

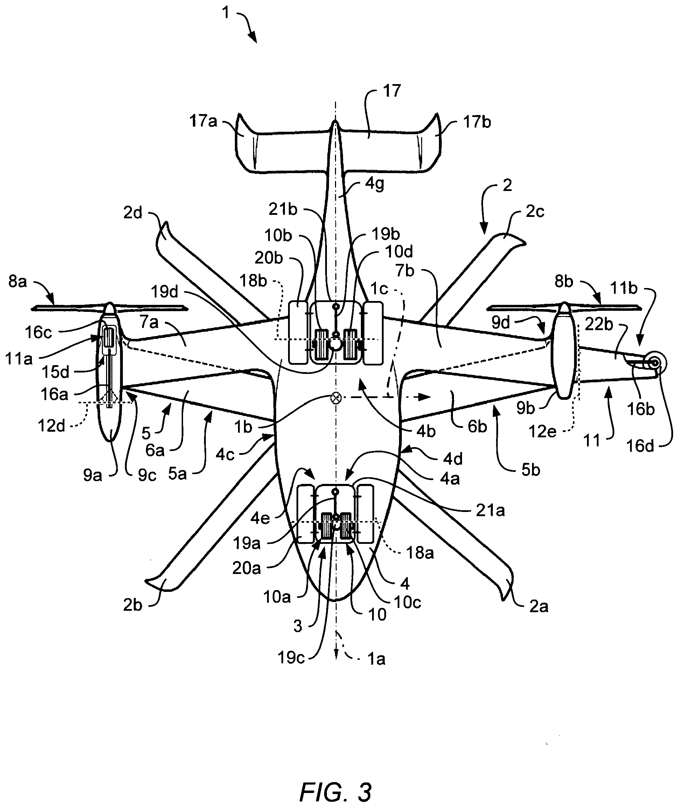

Figure 3 shows the compound helicopter 1 of Figure 2 with the main rotor 2, the landing gear arrangement 3, the fuselage 4, the fixed wing arrangement 5, the pusher propellers 8a, 8b, and the rear empennage 17. The main rotor 2 has the rotor blades 2a, 2b, 2c, 2d. The landing gear arrangement 3 has the wheel-type main landing gear 10 and the wheel-type lateral landing gear 11. The fixed-wing arrangement 5 has the braced wings 5a, 5b. The rear empennage 17 has the vertical fins 17a, 17b and is illustratively mounted to the tail boom 4g.

As described above at Figure 2, the wheel-type lateral landing gear 11 comprises the port side lateral landing gear 11a and the starboard side lateral landing gear 11b. However, in contrast to Figure 2 the port side lateral landing gear 11a is now illustrated according to a second alternative realization.

In this second alternative realization, the port side lateral landing gear 11a is, similar to the first alternative realization, pivotally mounted to the lateral nacelle 9a which preferably comprises an associated lateral landing gear compartment 15d for accommodating the port side lateral landing gear 11a in retracted position. The lateral landing gear compartment 15d is then preferably closed by means of a trap door, which is, nevertheless, not illustrated in Figure 3 for clarity and simplicity of the drawing.

However, for pivoting the port side lateral landing gear 11a from the illustrated retracted position into the deployed position, the port side lateral landing gear 11a is now in contrast to Figure 2 preferably pushed in a direction pointing away from the pusher propeller 8a for pivoting around a rotation axis 12d. The rotation axis 12d is by way of example at least essentially perpendicular to the longitudinal axis 1a of the fuselage 4.

Furthermore, in contrast to Figure 2 the starboard side lateral landing gear 11b is now illustrated according to a first alternative realization and illustrated in retracted position. In this first alternative realization, the starboard side lateral landing gear 11b is accommodated in a stub wing 22b that may be mounted to the interconnection region 9d. Preferably, the stub wing 22b is connected to the lateral landing gear 11b and both extend at least essentially in parallel to the transversal axis 1c of the fuselage 4 in a retracted position.

The stub wing 22b with the lateral landing gear 11b may be mounted to the lateral nacelle 9b. Illustratively, the stub wing 22b and the lateral landing gear 11b extend outward from the lateral nacelle 9b.

Preferably, the stub wing 22b and the starboard side lateral landing gear 11b are pivotable together between the retracted position and the deployed position of the starboard side lateral landing gear 11b around an associated rotation axis 12e. Illustratively, the rotation axis 12e is at least essentially oriented in parallel to the longitudinal axis 1a of the fuselage 4.

It should be noted that, similar to Figure 2, the compound helicopter 1 is shown in Figure 3 with two different realizations that distinguish the port side lateral landing gear 11a from the starboard side lateral landing gear 11b. However, this is merely intended for purposes of illustration and in order to permit to compare these realizations. In fact, in a real-life implementation either one of the two different realizations would be selected for the port side lateral landing gear 11a and the starboard side lateral landing gear 11b, as already described in more detail above at Figure 2.

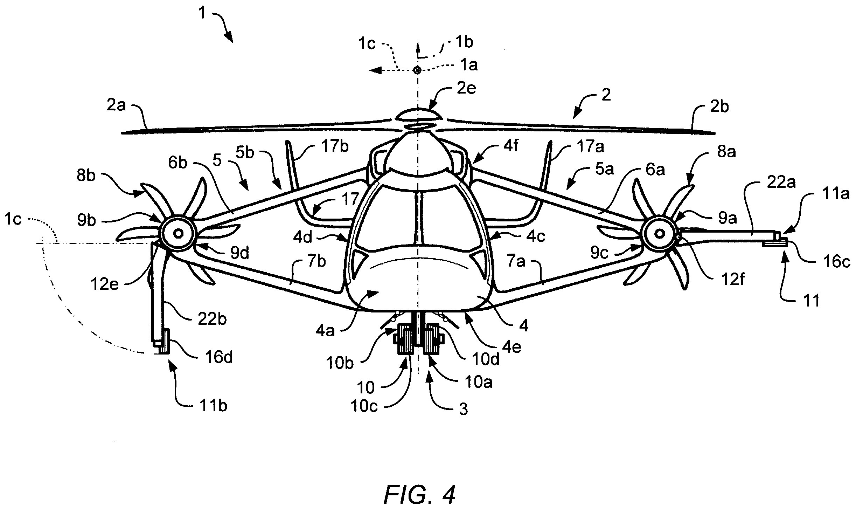

Figure 4 shows the compound helicopter 1 of Figure 3 with the main rotor 2, the landing gear arrangement 3, the fuselage 4, the fixed wing arrangement 5, the pusher propellers 8a, 8b, and the rear empennage 17. The main rotor 2 has the rotor blades 2a, 2b. The landing gear arrangement 3 has the wheel-type main landing gear 10 and the wheel-type lateral landing gear 11. The fixed-wing arrangement 5 has the braced wings 5a, 5b. The rear empennage 17 has the vertical fins 17a, 17b.

As described above at Figure 3, the wheel-type lateral landing gear 11 comprises the port side lateral landing gear 11a and the starboard side lateral landing gear 11b. The starboard side lateral landing gear 11b with its corresponding stub wing 22b are shown in extended position, whereas the starboard side lateral landing gear 11a with its corresponding stub wing 22a are illustrated in retracted position.

The stub wing 22a with the lateral landing gear 11a may be mounted to the lateral nacelle 9a. Illustratively, the stub wing 22a and the lateral landing gear 11a extend outward from the lateral nacelle 9a.

Preferably, the stub wing 22a and the port side lateral landing gear 11a are pivotable together between the retracted position and the deployed position of the port side lateral landing gear 11a around an associated rotation axis 12f. Illustratively, the rotation axis 12f is at least essentially oriented in parallel to the longitudinal axis 1a of the fuselage 4.

It should be noted that modifications to the above described embodiments are within the common knowledge of the person skilled in the art and, thus, also considered as being part of the present invention. For instance, the stub wing 22b of Figure 3 or Figure 4 may be fixedly and non-rotatably mounted to the interconnection region 9d or the lateral nacelle 9b, instead of being rotatably mounted thereto. In this configuration, only the lateral landing gear 11b may be rotatably mounted to the interconnection region 9d, the lateral nacelle 9b or the stub wing 22b. Similar, the stub wing 22a of Figure 4 may be fixedly and non-rotatably mounted to the interconnection region 9c or the lateral nacelle 9a, instead of being rotatably mounted thereto. In this configuration, only the lateral landing gear 11a may be rotatably mounted to the interconnection region 9d, the lateral nacelle 9a or the stub wing 22a.

### Reference List

- 1: Compound helicopter
- 1a: Longitudinal axis
- 1b: Vertical axis
- 1c: Transversal axis
- 2: Main Rotor
- 2a, 2b, 2c, 2d: Rotor blades
- 2e: Rotor head
- 3: Landing gear arrangement
- 4: Fuselage
- 4a: Front fuselage section
- 4b: Rear fuselage section
- 4c: Port side
- 4d: Starboard side
- 4e: Lower fuselage section
- 4f: Upper fuselage section
- 4g: Tail boom
- 5: Fixed wing arrangement
- 5a, 5b: Braced wings
- 6a, 6b: Upper wings
- 7a, 7b: Lower wings
- 7c: Lower wing extensional axis
- 8a, 8b: Propeller
- 9a, 9b: Lateral nacelles
- 9c, 9d: Interconnection regions of upper and lower wings
- 10 Main: landing gear
- 10a: Front main landing gear
- 10b: Rear main landing gear
- 10c, 10d: Main landing gear wheels
- 11: Lateral landing gear
- 11a: Port side lateral landing gear
- 11b: Starboard side lateral landing gear
- 12a, 12b, 12c, 12d, 12e, 12f: Lateral landing gear rotation axes
- 13a, 13b: Lateral landing gear actuators
- 14a, 14b: Lateral landing gear trap doors
- 15a, 15b, 15c, 15d: Lateral landing gear compartments
- 16a, 16b: Lateral landing gear legs
- 16c, 16d: Lateral landing gear wheels
- 17: Rear empennage
- 17a, 17b: Vertical fins
- 18a, 18b: Main landing gear rotation axes
- 19a, 19b: Main landing gear actuators
- 19c, 19d: Main landing gear main legs
- 20a, 20b: Main landing gear trap doors
- 21a, 21b: Main landing gear compartments
- 22a, 22b: Lateral stub wings

## Claims

1. A compound helicopter (1) with a fuselage (4) that extends along a longitudinal axis (1a) from a front fuselage section (4a) to a rear fuselage section (4b), comprising:
at least a first braced wing (5a) in joined-wing configuration and a second braced wing (5b) in joined-wing configuration, wherein the first braced wing (5a) comprises a first upper wing (6a) and a first lower wing (7a) which are interconnected in a first interconnection region (9c), and wherein the second braced wing (5b) comprises a second upper wing (6b) and a second lower wing (7b) which are interconnected in a second interconnection region (9d);
a wheel-type main landing gear (10) in tandem configuration with a first main landing gear (10a) and a second main landing gear (10b) which are pivotally mounted in a lower fuselage section (4e) of the fuselage (4) and aligned on the longitudinal axis (1a), wherein the first main landing gear (10a) is arranged in the front fuselage section (4a), and wherein the second main landing gear (10b) is arranged in the rear fuselage section (4b); and
a wheel-type lateral landing gear (11) with a first lateral landing gear (11a) and a second lateral landing gear (11b), wherein the first lateral landing gear (11a) is pivotally mounted in the first interconnection region (9c), and wherein the second lateral landing gear (11b) is pivotally mounted in the second interconnection region (9d).

2. The compound helicopter (1) of claim 1, wherein the first main landing gear (10a) is retractable into a first main landing gear compartment (21a), wherein the second main landing gear (10b) is retractable into a second main landing gear compartment (21b), and wherein the first main landing gear compartment (21a) and the second main landing gear compartment (21b) are arranged in the lower fuselage section (4e) and closable by associated trap doors (20a, 20b).

3. The compound helicopter (1) of claim 2, wherein the first main landing gear (10a) comprises a first main leg (19c) and a first actuator (19a), wherein the second main landing gear (10b) comprises a second main leg (19d) and a second actuator (19b), wherein the first actuator (19a) and the second actuator (19b) are arranged in a plane that is spanned by the longitudinal axis (1a) and a vertical axis (1b) of the fuselage (4), and wherein the first actuator (19a) and the second actuator (19b) are provided to move the first main leg (19c) and the second main leg (19d) in the plane that is spanned by the longitudinal axis (1a) and the vertical axis (1b) between a retracted position and a deployed position of the first main landing gear (10a) and the second main landing gear (10b).

4. The compound helicopter (1) of any one of the preceding claims, wherein a first lateral nacelle (9a) is mounted to the first interconnection region (9c), wherein a second lateral nacelle (9b) is mounted to the second interconnection region (9d), wherein a first propeller (8a) is mounted to the first lateral nacelle (9a), and wherein a second propeller (8b) is mounted to the second lateral nacelle (9b).

5. The compound helicopter (1) of claim 4, wherein the first lateral landing gear (11a) is pivotally mounted to the first lateral nacelle (9a), and wherein the second lateral landing gear (11b) is pivotally mounted to the second lateral nacelle (9b).

6. The compound helicopter (1) of claim 5, wherein the first lateral nacelle (9a) comprises a first lateral landing gear compartment (15c, 15d) for accommodating the first lateral landing gear (11a) in retracted position, and wherein the second lateral nacelle (9b) comprises a second lateral landing gear compartment for accommodating the second lateral landing gear (11b) in retracted position.

7. The compound helicopter (1) of claim 6, wherein the first lateral landing gear compartment (15c, 15d) and the second lateral landing gear compartment are closable by associated trap doors.

8. The compound helicopter (1) of any one of claims 5 to 7, wherein the first lateral landing gear (11a) is pushed in a direction pointing away from the first propeller (8a) for pivoting around a first rotation axis (12d) from a retracted position into a deployed position, and wherein the second lateral landing gear (11b) is pushed in a direction pointing away from the second propeller (8b) for pivoting around a second rotation axis from a retracted position into a deployed position.

9. The compound helicopter (1) of any one of claims 5 to 7, wherein the first lateral landing gear (11a) is pushed in a direction pointing toward the first propeller (8a) for pivoting around a first rotation axis (12c) from a retracted position into a deployed position, and wherein the second lateral landing gear (11b) is pushed in a direction pointing toward the second propeller (8b) for pivoting around a second rotation axis from a retracted position into a deployed position.

10. The compound helicopter (1) of claim 8 or 9, wherein the first and second rotation axes (12c; 12d) are at least essentially perpendicular to the longitudinal axis (1a).

11. The compound helicopter (1) of any one of claims 1 to 5, further comprising:
a first stub wing (22a) that is mounted to the first interconnection region (9c) and that extends at least essentially in parallel to a transversal axis (1c) of the fuselage (4); and
a second stub wing (22b) that is mounted to the second interconnection region (9d) and that extends at least essentially in parallel to the transversal axis (1c) of the fuselage (4).

12. The compound helicopter (1) of claims 5 and 11, wherein the first stub wing (22a) is mounted to the first lateral nacelle (9a), and wherein the second stub wing (22b) is mounted to the second lateral nacelle (9b).

13. The compound helicopter (1) of claim 12, wherein the first lateral landing gear (11a) is accommodated in the first stub wing (22a) in retracted position, and wherein the second lateral landing gear (11b) is accommodated in the second stub wing (22b) in retracted position.

14. The compound helicopter (1) of claim 12 or 13, wherein the first lateral landing gear (11a) is pivotable from a retracted position into a deployed position together with the first stub wing (22a) around a first rotation axis (12f) that is at least essentially oriented in parallel to the longitudinal axis (1a) of the fuselage (4), and wherein the second lateral landing gear (11b) is pivotable from a retracted position into a deployed position together with the second stub wing (22b) around a second rotation axis (12e) that is at least essentially oriented in parallel to the longitudinal axis (1a) of the fuselage (4).

15. The compound helicopter (1) of any one of claims 1 to 5, wherein the first lower wing (7a) comprises a first lateral landing gear compartment (15a) for accommodating the first lateral landing gear (11a) in retracted position, and wherein the second lower wing (7b) comprises a second lateral landing gear compartment (15b) for accommodating the second lateral landing gear (11b) in retracted position.

## Patentansprüche

1. Flugschrauber (1) mit einem Rumpf (4), der sich entlang einer Längsachse (1a) von einem vorderen Rumpfabschnitt (4a) zu einem hinteren Rumpfabschnitt (4b) erstreckt, umfassend:
mindestens einen ersten verstrebten Flügel (5a) in Verbundflügelkonfiguration und einen zweiten verstrebten Flügel (5b) in Verbundflügelkonfiguration, wobei der erste verstrebte Flügel (5a) einen ersten Oberflügel (6a) und einen ersten Unterflügel (7a) umfasst, die in einem ersten Verbindungsbereich (9c) miteinander verbunden sind, und wobei der zweite verstrebte Flügel (5b) einen zweiten Oberflügel (6b) und einen zweiten Unterflügel (7b) umfasst, die in einem zweiten Verbindungsbereich (9d) miteinander verbunden sind;
ein radartiges Hauptfahrwerk (10) in Tandemkonfiguration mit einem ersten Hauptfahrwerk (10a) und einem zweiten Hauptfahrwerk (10b), die in einem unteren Rumpfabschnitt (4e) des Rumpfes (4) schwenkbar gelagert und auf die Längsachse (1a) ausgerichtet sind, wobei das erste Hauptfahrwerk (10a) im vorderen Rumpfabschnitt (4a) angeordnet ist, und wobei das zweite Hauptfahrwerk (10b) im hinteren Rumpfabschnitt (4b) angeordnet ist; und
ein radartiges Seitenfahrwerk (11) mit einem ersten Seitenfahrwerk (11a) und einem zweiten Seitenfahrwerk (11b), wobei das erste Seitenfahrwerk (11a) im ersten Verbindungsbereich (9c) schwenkbar gelagert ist, und wobei das zweite Seitenfahrwerk (11b) im zweiten Verbindungsbereich (9d) schwenkbar gelagert ist.

2. Flugschrauber (1) nach Anspruch 1, bei dem das erste Hauptfahrwerk (10a) in einen ersten Hauptfahrwerksschacht (21a) einziehbar ist, bei dem das zweite Hauptfahrwerk (10b) in einen zweiten Hauptfahrwerksschacht (21b) einziehbar ist, und bei dem der erste Hauptfahrwerksschacht (21a) und der zweite Hauptfahrwerksschacht (21b) im unteren Rumpfabschnitt (4e) angeordnet und durch zugeordnete Klapptüren (20a, 20b) verschließbar sind.

3. Flugschrauber (1) nach Anspruch 2, bei dem das erste Hauptfahrwerk (10a) ein erstes Hauptbein (19c) und einen ersten Aktuator (19a) umfasst, bei dem das zweite Hauptfahrwerk (10b) ein zweites Hauptbein (19d) und einen zweiten Aktuator (19b) umfasst, bei dem der erste Aktuator (19a) und der zweite Aktuator (19b) in einer Ebene angeordnet sind, die von der Längsachse (1a) und einer Hochachse (1b) des Rumpfes (4) aufgespannt wird, und wobei der erste Aktuator (19a) und der zweite Aktuator (19b) vorgesehen sind, um das erste Hauptfahrwerksbein (19c) und das zweite Hauptfahrwerksbein (19d) in der durch die Längsachse (1a) und die vertikale Achse (1b) aufgespannten Ebene zwischen einer eingezogenen Position und einer ausgefahrenen Position des ersten Hauptfahrwerks (10a) und des zweiten Hauptfahrwerks (10b) zu bewegen.

4. Flugschrauber (1) nach einem der vorhergehenden Ansprüche, bei dem eine erste seitliche Gondel (9a) an dem ersten Verbindungsbereich (9c) angebracht ist, bei dem eine zweite seitliche Gondel (9b) an dem zweiten Verbindungsbereich (9d) angebracht ist, bei dem ein erster Propeller (8a) an der ersten seitlichen Gondel (9a) angebracht ist, und bei dem ein zweiter Propeller (8b) an der zweiten seitlichen Gondel (9b) angebracht ist.

5. Flugschrauber (1) nach Anspruch 4, bei dem das erste Seitenfahrwerk (11a) schwenkbar an der ersten seitlichen Gondel (9a) angebracht ist und bei dem das zweite Seitenfahrwerk (11b) schwenkbar an der zweiten seitlichen Gondel (9b) angebracht ist.

6. Flugschrauber (1) nach Anspruch 5, bei dem die erste seitliche Gondel (9a) einen ersten seitlichen Fahrwerksschacht (15c, 15d) zur Aufnahme des ersten seitlichen Fahrwerks (11a) in eingezogener Position umfasst, und bei dem die zweite seitliche Gondel (9b) einen zweiten seitlichen Fahrwerksschacht zur Aufnahme des zweiten seitlichen Fahrwerks (11b) in eingezogener Position umfasst.

7. Flugschrauber (1) nach Anspruch 6, bei dem der erste seitliche Fahrwerksschacht (15c, 15d) und der zweite seitliche Fahrwerksschacht durch zugeordnete Klapptüren verschließbar sind.

8. Flugschrauber (1) nach einem der Ansprüche 5 bis 7, bei dem das erste Seitenfahrwerk (11a) zum Schwenken um eine erste Drehachse (12d) aus einer eingezogenen Position in eine ausgefahrene Position in eine Richtung geschoben wird, die von dem ersten Propeller (8a) weg zeigt, und bei dem das zweite Seitenfahrwerk (11b) zum Schwenken um eine zweite Drehachse aus einer eingezogenen Position in eine ausgefahrene Position in eine Richtung geschoben wird, die von dem zweiten Propeller (8b) weg zeigt.

9. Flugschrauber (1) nach einem der Ansprüche 5 bis 7, bei dem das erste Seitenfahrwerk (11a) zum Schwenken um eine erste Drehachse (12c) aus einer eingezogenen Position in eine ausgefahrene Position in eine Richtung geschoben wird, die zum ersten Propeller (8a) hin weist, und bei dem das zweite Seitenfahrwerk (11b) zum Schwenken um eine zweite Drehachse aus einer eingezogenen Position in eine ausgefahrene Position in eine Richtung geschoben wird, die zum zweiten Propeller (8b) hin weist.

10. Flugschrauber (1) nach Anspruch 8 oder 9, bei dem die erste und die zweite Drehachse (12c; 12d) zumindest im Wesentlichen senkrecht zur Längsachse (1a) verlaufen.

11. Flugschrauber (1) nach einem der Ansprüche 1 bis 5, der ferner umfasst:
einen ersten Stummelflügel (22a), der an dem ersten Verbindungsbereich (9c) angebracht ist und der sich zumindest im Wesentlichen parallel zu einer Querachse (1c) des Rumpfes (4) erstreckt; und
einen zweiten Stummelflügel (22b), der an dem zweiten Verbindungsbereich (9d) angebracht ist und der sich zumindest im Wesentlichen parallel zu der Querachse (1c) des Rumpfes (4) erstreckt.

12. Flugschrauber (1) nach den Ansprüchen 5 und 11, bei dem der erste Stummelflügel (22a) an der ersten seitlichen Gondel (9a) angebracht ist und der zweite Stummelflügel (22b) an der zweiten seitlichen Gondel (9b) angebracht ist.

13. Flugschrauber (1) nach Anspruch 12, bei dem das erste Seitenfahrwerk (11a) in eingezogener Position im ersten Stummelflügel (22a) untergebracht ist und bei dem das zweite Seitenfahrwerk (11b) in eingezogener Position im zweiten Stummelflügel (22b) untergebracht ist.

14. Flugschrauber (1) nach Anspruch 12 oder 13, bei dem das erste Seitenfahrwerk (11a) zusammen mit dem ersten Stummelflügel (22a) um eine erste Drehachse (12f), die zumindest im Wesentlichen parallel zur Längsachse (1a) des Rumpfes (4) ausgerichtet ist, aus einer eingezogenen Position in eine ausgefahrene Position schwenkbar ist, und das zweite Seitenfahrwerk (11b) zusammen mit dem zweiten Stummelflügel (22b) um eine zweite Drehachse (12e), die zumindest im Wesentlichen parallel zur Längsachse (1a) des Rumpfes (4) ausgerichtet ist, aus einer eingezogenen Position in eine ausgefahrene Position schwenkbar ist.

15. Flugschrauber (1) nach einem der Ansprüche 1 bis 5, bei dem der erste Unterflügel (7a) einen ersten Seitenfahrwerksschacht (15a) zur Aufnahme des ersten Seitenfahrwerks (11a) in eingezogener Stellung umfasst, und bei dem der zweite Unterflügel (7b) einen zweiten Seitenfahrwerksschacht (15b) zur Aufnahme des zweiten Seitenfahrwerks (11b) in eingezogener Stellung umfasst.

## Revendications

1. Hélicoptère hybride (1) avec un fuselage (4) qui s'étend suivant un axe longitudinal (1a) depuis une section de fuselage avant (4a) jusqu'à une section de fuselage arrière (4b), et qui comprend :
au moins une première aile renforcée (5a) avec une configuration à ailes jointes et une seconde aile renforcée (5b) avec une configuration à ailes jointes, dans laquelle la première aile renforcée (5a) comprend une première aile supérieure (6a) et une première aile inférieure (7a) qui sont interconnectées dans une première zone d'interconnexion (9c), et dans laquelle la seconde aile renforcée (5b) comprend une seconde aile supérieure (6b) et une seconde aile inférieure (7b) qui sont interconnectées dans une seconde zone d'interconnexion (9d) ;
un train d'atterrissage principal à roues (10) avec une configuration en tandem entre un premier train d'atterrissage principal (10a) et un second train d'atterrissage principal (10b) qui sont montés à pivotement à l'intérieur d'une section de fuselage inférieure (4e) du fuselage (4) et qui sont alignés avec l'axe longitudinal (1a), dans lequel le premier train d'atterrissage principal (10a) est agencé dans la section de fuselage avant (4a), et dans lequel le second train d'atterrissage principal (10b) est agencé dans la section de fuselage arrière (4b) ; et
un train d'atterrissage latéral à roues (11) avec un premier train d'atterrissage latéral (11a) et un second train d'atterrissage latéral (11b), dans lequel le premier train d'atterrissage latéral (11a) est monté à pivotement à l'intérieur de la première zone d'interconnexion (9c), et dans lequel le second train d'atterrissage latéral (11b) est monté à pivotement à l'intérieur de la seconde zone d'interconnexion (9d).

2. Hélicoptère hybride (1) selon la revendication 1, dans lequel le premier train d'atterrissage principal (10a) est rétractable dans un premier compartiment (21a) de train d'atterrissage principal, dans lequel le second train d'atterrissage principal (10b) est rétractable dans un second compartiment (21b) de train d'atterrissage principal, et dans lequel le premier compartiment (21a) de train d'atterrissage principal et le second compartiment (21b) de train d'atterrissage principal sont agencés dans la section de fuselage inférieure (4e) et peuvent être fermés par des volets de trappes (20a, 20b) associées.

3. Hélicoptère hybride (1) selon la revendication 2, dans lequel le premier train d'atterrissage principal (10a) comprend une première jambe principale (19c) et un premier actionneur (19a), dans lequel le second train d'atterrissage principal (10b) comprend une seconde jambe principale (19d) et un second actionneur (19b), dans lequel le premier actionneur (19a) et le second actionneur (19b) sont agencés dans un plan qui est étendu suivant l'axe longitudinal (1a) et un axe vertical (1b) du fuselage (4), et dans lequel le premier actionneur (19a) et le second actionneur (19b) sont prévus pour déplacer la première jambe principale (19c) et la seconde jambe principale (19d) dans le plan qui est étendu suivant l'axe longitudinal (1a) et l'axe vertical (1b), entre une position rentrée et une position sortie du premier train d'atterrissage principal (10a) et du second train d'atterrissage principal (10b).

4. Hélicoptère hybride (1) selon l'une quelconque des revendications précédentes, dans lequel une première nacelle latérale (9a) est installée sur la première zone d'interconnexion (9c), dans lequel une seconde nacelle latérale (9b) est installée sur la seconde zone d'interconnexion (9d), dans lequel un premier propulseur (8a) est installée sur la première nacelle latérale (9a), et dans lequel un second propulseur (8b) est installée sur la seconde nacelle latérale (9b).

5. Hélicoptère hybride (1) selon la revendication 4, dans lequel le premier train d'atterrissage latéral (11a) est monté à pivotement sur la première nacelle latérale (9a), et dans lequel le second train d'atterrissage latéral (11b) est monté à pivotement sur la seconde nacelle latérale (9b).

6. Hélicoptère hybride (1) selon la revendication 5, dans lequel la première nacelle latérale (9a) comprend un premier compartiment (15c, 15d) de train d'atterrissage latéral pour loger le premier train d'atterrissage latéral (11a) en position rentrée, et dans lequel la seconde nacelle latérale (9b) comprend un second compartiment de train d'atterrissage latéral pour loger le second train d'atterrissage latéral (11b) en position rentrée.

7. Hélicoptère hybride (1) selon la revendication 6, dans lequel le premier compartiment (15c, 15d) de train d'atterrissage latéral et le second compartiment de train d'atterrissage latéral peuvent être fermés par des volets de trappes associées.

8. Hélicoptère hybride (1) selon l'une quelconque des revendications 5 à 7, dans lequel le premier train d'atterrissage latéral (11a) est basculé suivant une direction s'éloignant du premier propulseur (8a) pour pivoter autour d'un premier axe de rotation (12d) depuis une position rentrée jusqu'à une position sortie, et dans lequel le second train d'atterrissage latéral (11b) est basculé suivant une direction qui s'éloigne du second propulseur (8b) pour pivoter autour d'un second axe de rotation depuis une position rentrée jusqu'à une position sortie.

9. Hélicoptère hybride (1) selon l'une quelconque des revendications 5 à 7, dans lequel le premier train d'atterrissage latéral (11a) est basculé suivant une direction s'approchant du premier propulseur (8a) pour pivoter autour d'un premier axe de rotation (12c) depuis une position rentrée jusqu'à une position sortie, et dans lequel le second train d'atterrissage latéral (11b) est basculé suivant une direction s'approchant du second propulseur (8b) pour pivoter autour d'un second axe de rotation (12c) depuis une position rentrée jusqu'à une position sortie.

10. Hélicoptère hybride (1) selon la revendication 8 ou 9, dans lequel les premier et second axes de rotation (12c ; 12d) sont au moins principalement perpendiculaires à l'axe longitudinal (1a).

11. Hélicoptère hybride (1) selon l'une quelconque des revendications 1 à 5, comprenant en outre :
un premier embout d'aile (22a) qui est monté sur la première zone d'interconnexion (9c) et qui s'étend au moins principalement parallèlement à un axe transversal (1c) du fuselage (4) ; et
un second embout d'aile (22b) qui est monté sur la seconde zone d'interconnexion (9d) et qui s'étend au moins principalement parallèlement à l'axe transversal (1c) du fuselage (4).

12. Hélicoptère hybride (1) selon les revendications 5 et 11, dans lequel le premier embout d'aile (22a) est monté sur la première nacelle latérale (9a), et dans lequel le second embout d'aile (22b) est monté sur la seconde nacelle latérale (9b).

13. Hélicoptère hybride (1) selon la revendication 12, dans lequel le premier train d'atterrissage latéral (11a) est logé dans le premier embout d'aile (22a) en position rentrée, et dans lequel le second train d'atterrissage latéral (11b) est logé dans le second embout d'aile (22b) en position rentrée.

14. Hélicoptère hybride (1) selon la revendication 12 ou 13, dans lequel le premier train d'atterrissage latéral (11a) est apte à pivoter depuis une position rentrée jusqu'à une position sortie ainsi que le premier embout d'aile (22a) autour d'un premier axe de rotation (12f) qui est au moins essentiellement orienté parallèlement à l'axe longitudinal (1a) du fuselage (4), et dans lequel le second train d'atterrissage latéral (11b) est apte à pivoter depuis une position rentrée jusqu'à une position sortie ainsi que le second embout d'aile (22b) autour d'un second axe de rotation (12e) qui est au moins essentiellement orienté parallèlement à l'axe longitudinal (1a) du fuselage (4).

15. Hélicoptère hybride (1) selon l'une quelconque des revendications 1 à 5, dans lequel la première aile inférieure (7a) comprend un premier compartiment (15a) de train d'atterrissage latéral pour loger le premier train d'atterrissage latéral (11a) en position rentrée, et dans lequel la seconde aile inférieure (7b) comprend un second compartiment (15b) de train d'atterrissage latéral pour loger le second train d'atterrissage latéral (11b) en position rentrée.
